(19) Europäisches Patentamt
European Patent Office
Office européen des brevets

(11) **EP 4 549 392 A1**

(12) **EUROPEAN PATENT APPLICATION**
published in accordance with Art. 153(4) EPC

(43) Date of publication:
07.05.2025 Bulletin 2025/19

(21) Application number: 23815200.3

(22) Date of filing: 30.05.2023

(51) International Patent Classification (IPC):
*C01F 7/142* (2022.01)        *B01J 21/04* (2006.01)
*B01J 32/00* (2006.01)

(52) Cooperative Patent Classification (CPC):
B01J 21/00; B01J 21/04; C01F 7/142

(86) International application number:
PCT/CN2023/097087

(87) International publication number:
WO 2023/232021 (07.12.2023 Gazette 2023/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.05.2022  CN 202210598594
30.05.2022  CN 202210598742

(71) Applicants:
• China Petroleum & Chemical Corporation
Beijing 100728 (CN)
• Sinopec Research Institute of Petroleum
Processing Co., Ltd.
Beijing 100083 (CN)

(72) Inventors:
• YUAN, Shuai
Beijing 100083 (CN)
• LIN, Wei
Beijing 100083 (CN)
• YU, Shanqing
Beijing 100083 (CN)
• LIU, Bo
Beijing 100083 (CN)
• LIU, Yuqing
Beijing 100083 (CN)
• YAN, Jiasong
Beijing 100083 (CN)
• SONG, Haitao
Beijing 100083 (CN)

(74) Representative: Hoffmann Eitle
Patent- und Rechtsanwälte PartmbB
Arabellastraße 30
81925 München (DE)

(54) **PSEUDO-BOEHMITE AND PREPARATION METHOD THEREFOR, AND CATALYTIC CRACKING CATALYST COMPRISING PSEUDO-BOEHMITE AND PREPARATION AND USE THEREOF**

(57) The present invention provides a pseudo-boehmite, wherein the ratio of the crystalline sizes $D_{(130)}$ and $D_{(020)}$ of the pseudo-boehmite is $D_{(130)}/D_{(020)}$ = 1.0-1.5, preferably, 1.1-1.3. The present invention also provides a preparation method of the pseudo-boehmite, a catalytic cracking catalyst containing the pseudo-boehmite, and a preparation method and application of the catalytic cracking catalyst. The pseudo-boehmite is applied to a catalytic cracking catalyst, and can produce a significant mesopore distribution in case that the catalyst strength is qualified, significantly improving the pore structure of the catalyst, which is of great significance for promoting the efficient diffusion of heavy oil macromolecules, reaction intermediates and product molecules in the catalyst, reducing the coke yield, and optimizing the product distribution. The preparation method of pseudo-boehmite is green and environmentally friendly, low in cost, and easy to implement.

EP 4 549 392 A1

**Description**

**Technical Field**

The present invention relates to a pseudo-boehmite and a preparation method thereof, and also relates to a heavy oil catalytic cracking catalyst containing the pseudo-boehmite and a preparation method and application thereof.

**Background Art**

Catalytic cracking is an important means of heavy oil processing. The catalytic cracking catalysts currently used generally include molecular sieves and matrix materials. Alumina matrix has been widely used due to its good heavy oil cracking ability. A commonly used alumina matrix material is pseudo-boehmite, pseudo-boehmite is widely used in petroleum refining and petrochemical catalysts, and is often used as a binder for catalytic cracking catalysts and a precursor of hydrogenation catalyst carriers ($\gamma$-$Al_2O_3$). Pseudo-boehmite has good bonding properties after acidification and can be used as a binder for catalytic cracking catalysts, it can also form a certain mesoporous structure after the catalyst is prepared and formed.

The chemical formula of pseudo-boehmite is $AlOOH \cdot nH_2O$ (0<n<1, especially 0.08-0.62), and it is an aluminum oxide compound with a water content greater than that of boehmite and a crystalline size smaller than that of boehmite. It is a crystal phase that is easily generated during the synthesis of aluminum hydroxide, its crystallization is incomplete, and its typical crystal form is very thin wrinkled lamellae.

There are many methods for preparing pseudo-boehmite, mainly including aluminum alcoholate hydrolysis method and precipitation method. The precipitation method is divided into two categories: acid method and alkali method.

The aluminum alcoholate hydrolysis method uses metallic aluminum and higher alcohols (n-pentanol, n-hexanol, isopropanol) as raw materials, reacts metallic aluminum with alcohol in the presence of a catalyst to form aluminum alcoholate, and then hydrolyzes it to obtain pseudo-boehmite. However, this method has high production costs and complex production processes.

The alkali precipitation method refers to the method of preparing pseudo-boehmite by neutralizing and precipitating acidic aluminum salts with alkali; wherein commonly used aluminum salts include $Al_2(SO_4)_3$, $Al(NO_3)_3$, $AlCl_3$, etc., and commonly used alkali precipitants include $NaOH$, $NH_3 \cdot H_2O$, $NaAlO_2$, $Na_2CO_3$, etc.

The acid precipitation method refers to the method of preparing pseudo-boehmite by neutralizing and precipitating alkaline aluminate with acid, wherein the alkaline aluminate is generally sodium aluminate. The acid used can be a strong acid ($HNO_3$, $H_2SO_4$, etc.), or a weak acid ($NH_4HCO_3$, $NaHCO_3$, etc.) and $CO_2$, etc. Among them, the $NaAlO_2$-$CO_2$ method is also called the carbonization method. The carbonization method for preparing pseudo-boehmite can rely on the process for producing alumina by sintering method, using the intermediate product $NaAlO_2$ solution and the waste gas $CO_2$ coming from aluminum plant as reaction raw materials. The process is simple, and the by-products and waste liquids and the like in the production process can be returned to the alumina production process for reuse; it is the method with lowest cost for industrial production of pseudo-boehmite.

The pseudo-boehmite prepared by conventional carbonization method has low crystallinity and a most probable (mode) pore diameter of only 3.8 nm. When it is prepared into a catalytic cracking catalyst, it can only provide a mesoporous structure of 3.8 nm. After the existing pseudo-boehmite is acidified, the catalytic cracking catalyst prepared has a most probable pore diameter of no more than 4.5 nm, and it is difficult to form a pore structure with a larger pore diameter. The molecular size of the feedstocks for catalytic cracking is relatively large, and its diffusion in the pores of 3.8 nm or 4.5 nm is significantly hindered. This hindering effect limits the efficient diffusion and conversion of heavy oil raw material molecules, which is not conducive to reducing the coke yield and improving the product distribution.

CN110304644A discloses a method for producing high-purity and high-viscosity pseudo-boehmite by carbonization. The method produces sodium aluminate solution of high-purity by pre-decomposing and purifying sodium aluminate solution, and then reacts the sodium aluminate solution with carbon dioxide gas to obtain pseudo-boehmite of high-purity. However, the pseudo-boehmite has a low most probable pore diameter and cannot provide a larger pore diameter in the preparation process of catalytic cracking catalyst.

The catalytic cracking catalyst prepared from existing pseudo-boehmite has poor coke selectivity. Currently, there is no literature report that pseudo-boehmite prepared by carbonization method can provide a larger most probable pore diameter distribution after being acidified and peptized and applied in catalytic cracking catalyst.

**Summary of the Invention**

The first technical problem to be solved by the present invention is to provide a pseudo-boehmite which can produce a larger mesoporous structure after acidification.

The second technical problem to be solved by the present invention is to provide a method for preparing the pseudo-boehmite.

The third technical problem to be solved by the present invention is to provide a catalytic cracking catalyst, which contains pseudo-boehmite with specific crystal characteristics and has a low coke yield when used in catalytic cracking reactions.

The fourth technical problem to be solved by the present invention is to provide preparation and application methods of the catalytic cracking catalyst.

Specifically, the present invention provides the following three sets of technical solutions A, B and C:

A1. A pseudo-boehmite, characterized in that the pseudo-boehmite has a crystalline size $D_{(130)}$ = 4 nm-10 nm, and $D_{(130)}/D_{(020)}$ is 1.0-1.5.

A2. The pseudo-boehmite according to technical solution A1, characterized in that the most probable pore diameter of the pseudo-boehmite is greater than 4.5 nm and not more than 12 nm, for example, 4.8 nm-11 nm; the most probable pore diameter of the pseudo-boehmite is preferably 5 nm-10 nm.

A3. The pseudo-boehmite according to technical solution A1 or A2, characterized in that $D_{(130)}/D_{(020)}$ of the pseudo-boehmite is 1.1-1.3.

A4. The pseudo-boehmite according to technical solution A1, A2 or A3, characterized in that the peptization index of the pseudo-boehmite is 90%-100%, for example, the peptization index is 93%-99%; the crystallinity of the pseudo-boehmite is 85%-110%, for example, the crystallinity of the pseudo-boehmite is 88%-108%; the pore volume of the pseudo-boehmite is 0.3 cm$^3$/g-0.58 cm$^3$/g, for example, 0.31 cm$^3$/g-0.52 cm$^3$/g.

A5. A method for preparing pseudo-boehmite, comprising the steps of:

(1) reacting a sodium aluminate solution with $CO_2$ to form a first slurry;
(2) aging the first slurry under certain conditions to obtain an aged slurry; the aging under the certain conditions includes: first, static aging and then aging under stirring, and the aging temperature is above 100 °C and not more than 185 °C;
(3) filtering, washing and drying the aged slurry.

A6. The method according to technical solution A5, characterized in that in step (1), the concentration of the sodium aluminate solution is 5 g/L-60 g/L in terms of $Al_2O_3$; and the pH value at the end of the reaction of the sodium aluminate solution with $CO_2$ is 8.5-10.5.

A7. The method according to technical solution A5 or A6, characterized in that in step (1), the conditions for the reaction of the sodium aluminate solution with $CO_2$ include: a reaction starting temperature of 10 °C-35 °C, a $CO_2$-containing gas with a $CO_2$ concentration of 20%-100% by volume is introduced into the sodium aluminate solution for conducting reaction, and the reaction end temperature is preferably 15 °C-55 °C.

A8. The method according to technical solution A5, A6 or A7, characterized in that in step (2), the slurry aging temperature is 120 °C-180 °C, the aging pressure is 0.2 Mpa-1 Mpa, and the aging time is 2 h-10 h.

A9. The method according to technical solution A5 or A8, characterized in that the time of static aging in step (2) is 1 h-4 h, such as 2 h-3 h, and the aging time under stirring is 1 h-6 h.

A10. The method according to technical solution A5, A6 or A7 or A8 or A9, characterized in that the aging temperature is 135 °C-180 °C, and the aging is preferably aging at a constant temperature.

A11. The method according to technical solution A5, A6, A7 or A8, characterized in that the stirring speed of the aging under stirring is 50 r/min-400 r/min.

A12. Use of the pseudo-boehmite according to any one of technical solutions A1-A4 in catalyst preparation.

B1. A catalytic cracking catalyst, which comprises 10 wt%-50 wt% of a Y-type molecular sieve on a dry basis, 0-40 wt% of other molecular sieves on a dry basis, 10 wt%-40 wt% of pseudo-boehmite having specific crystal characteristics in terms of alumina, 3 wt%-20 wt% of a binder in terms of oxide, and 10 wt%-80 wt% of clay on a dry basis; the pseudo-boehmite having specific crystal characteristics has $D_{(130)}/D_{(020)}$ = 1-1.5, $D_{(130)}$ = 4 nm-10 nm, wherein $D_{(130)}$ represents the crystalline size of the crystal plane represented by the (130) peak in the XRD spectrum of the pseudo-boehmite crystallines, and $D_{(020)}$ represents the crystalline size of the crystal plane represented by the (020) peak in the XRD spectrum of the pseudo-boehmite crystallines.

B2. The catalytic cracking catalyst according to technical solution B1, characterized in that the pore volume of the pseudo-boehmite with specific crystal characteristics is 0.3 cm$^3$/g-0.58 cm$^3$/g, the most probable pore diameter is greater than 4.5 nm-12 nm, and the peptization index is 90%-100%. Preferably, the pseudo-boehmite has a pore diameter of 5 nm-10 nm, a crystallinity of 85%-110%, and the $D_{(130)}/D_{(020)}$ of the pseudo-boehmite with specific crystal characteristics is preferably 1.1-1.3; the other molecular sieves are preferably one or more of MFI structure zeolite, Beta zeolite, and non-zeolite molecular sieves.

B3. The catalytic cracking catalyst according to technical solution B1, characterized in that the Y-type molecular sieve is one or more of REY, REHY, DASY, SOY, PSRY, HSY, and HRY; and the other molecular sieves are one or more of HZSM-5, ZRP, and ZSP.

B4. The catalytic cracking catalyst according to any one of technical solutions B1-B3, characterized in that the pseudo-boehmite with specific crystal characteristics has a $D_{(130)}$ of 6.5 nm-8.2 nm, such as 7.8 nm-8.2 nm, a $D_{(130)}/D_{(020)}$ of 1.22-1.29, and a most probable pore diameter of preferably 7.4 nm-8.5 nm, such as 7.8 nm-8.5 nm.

B5. The catalytic cracking catalyst according to any one of technical solutions B1-B4, characterized in that the most probable pore diameter of the catalytic cracking catalyst is 3.5 nm-4 nm and 4.5 nm-10 nm.

B6. A method for preparing a catalytic cracking catalyst, which comprises the following steps: preparing pseudo-boehmite with specific crystal characteristics, forming a slurry comprising the pseudo-boehmite with specific crystal characteristics, Y-type molecular sieve, optional other molecular sieves, a binder, clay and water, and spray drying.

B7. The method according to technical solution B6, characterized in that the method for preparing the pseudo-boehmite with specific crystal characteristics comprises the following steps:

(1) reacting a sodium aluminate solution with $CO_2$ to generate a first slurry;
(2) aging the first slurry under certain conditions to form a second slurry; the aging under the certain conditions includes: first, static aging, then aging under stirring, and the aging temperature is above 100 °C and not more than 185 °C;
(3) the second slurry is filtered, washed, and dried to obtain pseudo-boehmite having specific crystal characteristics.

B8. The method according to technical solution B7, characterized in that in step (1), the $Al_2O_3$ concentration of the sodium aluminate solution is 5 g/L-60 g/L; the pH value at endpoint of the reaction of the sodium aluminate solution with $CO_2$ is 8.5-10.5.

B9. The method according to technical solution B7 or B8, characterized in that in step (1), the conditions for the reaction of the sodium aluminate solution with $CO_2$ include a reaction starting temperature of 10 °C-35 °C, a $CO_2$-containing gas with a $CO_2$ concentration of 20% by volume to 100% by volume is introduced into the sodium aluminate solution for conducting reaction, and the reaction end temperature is preferably 15 °C-55 °C.

B10. The method according to technical solution B7, B8 or B9, characterized in that the aging pressure is 0.2 Mpa-1 Mpa and the aging time is 2 h-10 h; preferably, the time of static aging in step (2) is 1 h-4 h, for example 2 h-3 h, and the aging time under stirring is 1 h-6 h.

B11. The method according to technical solution B10, characterized in that the aging temperature is 135 °C-180 °C, the aging is preferably an aging at a constant temperature, and the stirring speed of the aging under stirring is preferably 50 r/min-400 r/min.

B12. The method according to technical solution B7, characterized in that the washing conditions in step (3) are: the washing is performed with deionized water at 70 °C-100 °C until the pH value of the wet filter cake is 7-7.5; and the drying in step (3) is performed at a drying temperature of 70 °C-98 °C.

B13. The method according to technical solution B6, characterized in that the preparation method of the catalytic cracking catalyst comprises: slurrying pseudo-boehmite with specific crystal characteristics with water to form a pseudo-boehmite slurry, wherein the solid content is preferably 5 wt%-25 wt%, adding hydrochloric acid, wherein the mass ratio of HCl to pseudo-boehmite with specific crystal characteristics calculated as alumina is 0.037-0.104, and the concentration of hydrochloric acid can be 10 wt%-37 wt%, and then mixing with a slurry containing Y-type molecular sieve, optional other molecular sieves, a binder, clay and water to obtain a colloidal slurry, wherein the solid content of the slurry is preferably 20 wt%-40 wt%, and spray drying the colloidal slurry, and optionally washing and drying.

B14. A catalytic cracking method, comprising a step of contacting and reacting heavy oil with a catalytic cracking catalyst under FCC conditions, characterized in that the catalytic cracking catalyst is the catalytic cracking catalyst according to any one of technical solutions B1-B5 or the catalytic cracking catalyst obtained according to any one of technical solutions B6-B13; the FCC conditions are, for example: a reaction temperature of 480 °C-530 °C, a reaction time of 1-10 seconds, and a catalyst-to-oil ratio of 3-20:1 by weight.

C1. A pseudo-boehmite, characterized in that the ratio of the crystalline sizes $D_{(130)}$ and $D_{(020)}$ of the pseudo-boehmite is $D_{(130)}/D_{(020)} = 1.0$-1.5, preferably 1.1-1.3.

C2. The pseudo-boehmite according to any one of the aforementioned technical solutions of C series, characterized in that the crystalline size D is measured by X-ray powder diffraction (XRD) and the crystalline size D is calculated according to the Scherrer formula

$$D = \frac{K \times \lambda}{\beta \times \cos\theta},$$

wherein K=1.075, $\lambda$ is the wavelength of the anodic radiation $K\alpha 1$ spectrum line, $\beta$ is the half-peak width (in radians) of the specific diffraction peak of pseudo-boehmite, and $\theta$ is the Bragg diffraction angle (in degrees) of the diffraction peak, that is, $D_{(130)}$ represents the crystalline size of the sample

$$D_{(130)} = \frac{K \times \lambda}{\beta_{130} \times \cos\theta}$$

perpendicular to the (130) crystal plane, $\beta_{130}$ is the half-peak width of (130) diffraction peak (corresponding to 2θ=38.3°) of the sample; $D_{(020)}$ represents the crystalline size of the sample perpendicular to the

$$D_{(020)} = \frac{K \times \lambda}{\beta_{020} \times \cos\theta}$$

(020) crystal plane, $\beta_{020}$ is the half-peak width of (020) diffraction peak (corresponding to 2θ=14.1°) of the sample.

C3. The pseudo-boehmite according to any one of the aforementioned technical solutions of C series, characterized in that the molecular formula of the pseudo-boehmite is $AlOOH \cdot nH_2O$, n=0.08-0.62, and its crystalline size $D_{(130)}$ is not greater than 10 nm.

C4. The pseudo-boehmite according to any one of the aforementioned technical solutions of C series, characterized in that the crystalline size of the pseudo-boehmite is $D_{(130)}$ = 4 nm-10 nm, preferably, 6.5 nm-8.2 nm, or 7.8 nm-8.2 nm.

C5. The pseudo-boehmite according to any one of the aforementioned technical solutions of C series, characterized in that the pseudo-boehmite has a most probable pore diameter greater than 4.5 nm and not more than 12 nm, such as 4.8 nm-11 nm, or 5 nm-10 nm.

C6. The pseudo-boehmite according to any one of the aforementioned technical solutions of C series, characterized in that the pseudo-boehmite has a crystallinity of 85%-110%, for example 88%-108%.

C7. The pseudo-boehmite according to any one of the aforementioned technical solutions of C series, characterized in that the peptization index of the pseudo-boehmite is 90%-100%, such as 93%-99%.

C8. The pseudo-boehmite according to any one of the aforementioned technical solutions of C series, characterized in that the pore volume of the pseudo-boehmite is 0.3 $cm^3$/g-0.58 $cm^3$/g, for example, 0.31 $cm^3$/g-0.52 $cm^3$/g.

C9. A method for preparing pseudo-boehmite, comprising the following steps of:

(1) reacting a sodium aluminate solution with $CO_2$ to form a first slurry;
(2) aging the first slurry under certain conditions to obtain an aged slurry; the aging under the certain conditions includes: firstly static aging, and then aging under stirring, and the aging temperature is above 100 °C and not more than 185 °C;
(3) filtering, washing and drying the aged slurry.

C10. The method for preparing pseudo-boehmite according to any one of the above technical solutions of C series, characterized in that in step (1), the concentration of the sodium aluminate solution is 5 g/L-60 g/L in terms of $Al_2O_3$; and the pH value at endpoint of the reaction of the sodium aluminate solution with $CO_2$ is 8.5-10.5.

C11. The method for preparing pseudo-boehmite according to any one of the aforementioned technical solutions of C series, characterized in that, in step (1), the conditions for the reaction of the sodium aluminate solution with $CO_2$ include: a reaction starting temperature of 10 °C-35 °C, a $CO_2$-containing gas with a $CO_2$ concentration of 20%-100% by volume (the balance is an inert gas such as nitrogen) is introduced into the sodium aluminate solution for conducting reaction, and the reaction end temperature is preferably 15 °C-55 °C.

C12. The method for preparing pseudo-boehmite according to any one of the aforementioned technical solutions of C series, characterized in that in step (2), the aging temperature of slurry is 120 °C-180 °C, the aging pressure is 0.2 MPa-1 MPa, and the aging time is 2 h-12 h, for example, 2 h-10 h.

C13. The method for preparing pseudo-boehmite according to any one of the aforementioned technical solutions of C series, characterized in that the time of static aging in step (2) is 1 h-8 h, such as 2.5 h-7 h, or 1 h-4 h, such as 2 h-3 h, and the aging time under stirring is 1 h-6 h.

C14. The method for preparing pseudo-boehmite according to any one of the aforementioned technical solutions of C series, characterized in that the aging temperature is 135 °C-180 °C, and the aging is preferably aging at a constant temperature.

C15. The method for preparing pseudo-boehmite according to any one of the aforementioned technical solutions of C series, characterized in that the stirring speed of the aging under stirring is 50 r/min-450 r/min, 100 r/min-400 r/min.

C16. The method for preparing pseudo-boehmite according to any one of the aforementioned technical solutions of C series, characterized in that in step (2):

the conditions for static aging include: a temperature of 120 °C-180 °C, preferably 135 °C-180 °C, a pressure of 0.2 MPa-1 MPa, a time of 1 h-8 h, for example 2.5 h-7 h, stirring speed of 100 r/min-450 r/min;
the conditions for aging under stirring include: a temperature of 120 °C-180 °C, preferably 135 °C-180 °C, a pressure of 0.2 MPa-1 MPa, a time of 1 h-6, for example 1 h-5 h;
preferably, the ratio of the time of static aging to the aging time under stirring is 1-5:1, preferably 1.25-3:1.

C17. The method for preparing pseudo-boehmite according to any one of the aforementioned technical solutions of C series, characterized in that the washing conditions in step (3) are: washing is performed with deionized water at 70 °C-100 °C until the pH value of the wet filter cake is 7-7.5; and the drying in step (3) is performed at a drying temperature of 70 °C-98 °C.

C18. Use of the pseudo-boehmite according to any of the aforementioned technical solutions of C series, which is used as a catalyst, carrier, and binder in the petroleum industry; as a carrier coating for automobile exhaust treatment catalysts in the automobile industry; as an additive for flame retardant materials in the fire protection field; as an ink-absorbing coating in high-grade inkjet printing paper in the papermaking industry; as a gas purification adsorbent, drinking water defluoridation agent, industrial wastewater color and odor eliminator in the environmental protection industry; as a coating additive in the construction industry; and as a reinforcing agent in ceramic composite materials.

C19. A catalytic cracking catalyst comprising 10 wt% to 50 wt% of a Y-type molecular sieve on a dry basis, 0 to 40 wt% of other molecular sieves on a dry basis, 10 wt% to 40 wt% of pseudo-boehmite according to any one of the above technical solutions of C series in terms of alumina, 3 wt% to 20 wt% of a binder in terms of oxide, and 10 wt% to 80 wt% of clay on a dry basis;

preferably, the other molecular sieves are one or more of MFI structure zeolite, Beta zeolite, and non-zeolite molecular sieves; more preferably, the other molecular sieves are one or more of HZSM-5, ZRP, and ZSP; and/or, preferably, the Y-type molecular sieve is one or more of REY, REHY, DASY, SOY, PSRY, HSY, and HRY.

C20. A method for preparing the catalytic cracking catalyst according to any one of the aforementioned technical solutions of C series, comprising the following steps:

preparing pseudo-boehmite according to any one of the above technical solutions of C series,
forming a slurry comprising the pseudo-boehmite, Y-type molecular sieve, optionally other molecular sieves, a binder, clay and water, and spray drying.

C21. The preparation method of a catalytic cracking catalyst according to any one of the above technical solutions of C series, characterized in that the method comprises:

slurrying the pseudo-boehmite according to any one of the above-mentioned C series technical solutions with water to form a pseudo-boehmite slurry, wherein the solid content of the slurry is preferably 5 wt%-25 wt%. adding hydrochloric acid, wherein the mass ratio of HCl to the pseudo-boehmite calculated as alumina is 0.037-0.104, and the concentration of hydrochloric acid can be 10 wt%-37 wt%; then, mixing the slurry containing Y-type molecular sieve, other optional molecular sieves, binder, clay and water to obtain a colloidal slurry, wherein the solid content of the slurry is preferably 20 wt%-40 wt%; spray drying, and optionally, washing and drying.

C22. A catalytic cracking method, comprising a step of contacting and reacting heavy oil with a catalytic cracking catalyst under FCC conditions, characterized in that the catalytic cracking catalyst is a catalytic cracking catalyst according to any one of the aforementioned technical solutions of C series or a catalytic cracking catalyst obtained by The preparation method of a catalytic cracking catalyst according to any one of the aforementioned technical solutions of C series; for example, the FCC conditions include: a reaction temperature of 480 °C-530 °C, a reaction time of 1-10 seconds, and a catalyst-oil ratio of 3-20:1 by weight.

## Detailed Description of Invention

Herein, pressures are gauge pressures unless otherwise specified.

Herein, the contents are values based on weight percentage unless otherwise specified.

Herein, sodium aluminate and sodium metaaluminate are synonymous, both referring to: $NaAlO_2$.

The present invention provides a pseudo-boehmite, wherein the ratio of the crystalline size $D_{(130)}$ to $D_{(020)}$ of the pseudo-boehmite is $D_{(130)}/D_{(020)} = 1.0$-1.5, preferably, 1.1-1.4, or 1.1-1.3, or 1.2-1.35, or 1.22-1.29.

The crystalline size D is measured by X-ray powder diffraction (XRD) and the crystalline size D is calculated according to the Scherrer formula $D = \dfrac{K \times \lambda}{\beta \times \cos\theta}$, wherein K=1.075, $\lambda$ is the wavelength of the anodic radiation $K\alpha1$ spectrum line, $\beta$ is the half-peak width (in radians) of the specific diffraction peak of pseudo-boehmite, and $\theta$ is the Bragg diffraction angle (in degrees) of the diffraction peak, that is, $D_{(130)}$ represents the crystalline size of the sample

$$D_{(130)} = \frac{K \times \lambda}{\beta_{130} \times \cos\theta}$$

perpendicular to the (130) crystal plane, $\beta_{130}$ is the half-peak width of (130) diffraction peak (corresponding to $2\theta=38.3°$) of the sample; $D_{(020)}$ represents the crystalline size of the sample perpendicular to the (020)

$$D_{(020)} = \frac{K \times \lambda}{\beta_{020} \times \cos\theta}$$

crystal plane, $\beta_{020}$ is the half-peak width of (020) diffraction peak (corresponding to $2\theta=14.1°$) of the sample.

The pseudo-boehmite provided by the present invention, which has a molecular formula of $AlOOH \cdot nH_2O$, n=0.08-0.62, and a crystalline size $D_{(130)}$ of no more than 10 nm.

The pseudo-boehmite provided by the present invention, which has a crystalline size $D_{(130)}$ = 4 nm-10 nm, preferably, 5 nm-8.5 nm, or 5.1 nm-8.5 nm, or 5.5 nm-8.5 nm, or 6 nm-8.2 nm, or 6.5 nm-8.2 nm, or 7.8 nm-8.2 nm.

The pseudo-boehmite provided by the present invention, which has a most probable pore diameter greater than 4.5 nm and not more than 12 nm, such as 4.5 nm-9 nm, or 4.8 nm-11 nm, or 5 nm-10 nm, or 5 nm-9 nm, or 6 nm-8.5 nm, or 7 nm-9 nm, or 7.4 nm-8.5 nm, or 7.8 nm-8.5 nm. The pore diameter refers to the diameter.

The pseudo-boehmite provided by the present invention has a crystallinity of 85%-110%, such as 88%-108%, or 90%-105%, or 99%-105%.

The pseudo-boehmite provided by the present invention has a peptization index of 90%-100%, such as 93%-99%.

The pseudo-boehmite provided by the present invention has a pore volume of 0.3 $cm^3$/g-0.58 $cm^3$/g, such as 0.31 $cm^3$/g-0.52 $cm^3$/g, or 0.33 $cm^3$/g-0.5 $cm^3$/g.

The present invention also provides a method for preparing the pseudo-boehmite, which comprises the following steps:

(1) reacting a sodium aluminate (or sodium metaaluminate) solution with $CO_2$ to form a first slurry;
(2) aging the first slurry under certain conditions to obtain an aged slurry (referred to as a second slurry); preferably, the aging under the certain conditions is: first, static aging, then aging under stirring, and the aging temperature is above 100 °C and not more than 185 °C;(3) filtering, washing and drying the aged slurry.

According to the preparation method of pseudo-boehmite of the present invention, in step (1), the concentration of the sodium aluminate solution is preferably 5 g/L-60 g/L in terms of $Al_2O_3$. The sodium aluminate solution can be purchased commercially or prepared according to existing methods. For example, the preparation method of the sodium aluminate solution comprises: reacting aluminum hydroxide and alkali solution at a temperature of 90 °C-120 °C for 1 h-4 h, and diluting to an $Al_2O_3$ concentration of 5 g/L-60 g/L. The alkali solution is, for example, a sodium hydroxide solution. The causticity ratio of the sodium aluminate solution is, for example, 1.0-3.2.

According to the preparation method of pseudo-boehmite of the present invention, in step (1), the sodium aluminate solution is contacted with $CO_2$ for reaction, wherein a gas containing $CO_2$ can be introduced into the sodium aluminate solution for conducting reaction, and the volume concentration of $CO_2$ in the $CO_2$-containing gas is 20-100 %, for example, 40-100% by volume (the balance is an inert gas such as nitrogen).

According to the preparation method of pseudo-boehmite of the present invention, in step (1), the pH value at the end of the reaction between the sodium aluminate solution and $CO_2$ is 8.5-10.5.

According to the preparation method of pseudo-boehmite of the present invention, in step (1), the reaction starting temperature is preferably 10 °C-35 °C, and the reaction end temperature is preferably 15 °C-55 °C.

According to the preparation method of pseudo-boehmite of the present invention, in step (1), the sodium aluminate solution is contacted with $CO_2$ for reaction, and the reaction time of the sodium aluminate solution with $CO_2$ is preferably 20-70 minutes.

According to the preparation method of pseudo-boehmite of the present invention, in step (1), the conditions for the reaction of sodium aluminate solution with $CO_2$ include: a reaction starting temperature of 10 °C-35 °C, a reaction time of 20-70 minutes, and a reaction end temperature of 15 °C-55 °C. The pH value at the end of the reaction of sodium aluminate solution with $CO_2$ is 8.5-10.5. Preferably, the sodium aluminate solution is reacted with $CO_2$ by contacting the sodium aluminate solution with a gas containing $CO_2$, wherein the volume concentration of $CO_2$ in the gas containing $CO_2$ is 20%-100% (the balance is an inert gas such as nitrogen).

According to the preparation method of pseudo-boehmite of the present invention, in step (2), the first slurry is aged under certain conditions. In one embodiment, the aging temperature is 100 °C-185 °C, for example, 120 °C-180 °C, preferably 135 °C-180 °C. The first slurry can be heated to 100 °C-185 °C, preferably 120 °C-180 °C, or 135 °C-180 °C, and then aged at this temperature. Preferably, the time for the first slurry to rise from the reaction end temperature to the aging temperature does not exceed 60 minutes. Preferably, the temperature from the start of aging to the end of aging is carried out at a constant temperature, and the aging at a constant temperature refers to controlling the temperatures of static aging and of aging under stirring to remain basically unchanged, for example, the difference between the temperature of static aging and the temperature of aging under stirring is preferably not more than 2 °C.

According to the preparation method of pseudo-boehmite of the present invention, in step (2), the aging pressure is preferably 0.2 MPa-1 MPa.

According to the preparation method of pseudo-boehmite of the present invention, in step (2), the stirring speed is controlled at 50 r/min-400 r/min. The stirring can be carried out by an existing stirring method, and by stirring, the aged slurry rotates in the aging kettle driven by a stirring paddle.

According to the preparation method of pseudo-boehmite of the present invention, in step (2), the aging time is 2 h-12 h, for example, 2 h-10 h.

According to the preparation method of pseudo-boehmite of the present invention, in step (2), the slurry is first static aged at a certain temperature and then aged under stirring. The static aging refers to the aging without stirring, so that the slurry is in a static state, for example, the slurry is left to stand for a period of time. Preferably, the first slurry is firstly static aged at the aging temperature for 1 h-8 h, for example, 2.5 h-7 h, 1 h-4 h, for example, 2 h-3 h, and then aged under stirring at the aging temperature for 1 h-6 h. The stirring speed is 50 r/min-450 r/min, for example, 50 r/min-400 r/min, or 60 r/min-400 r/min, or 100 r/min-400 r/min.

According to the preparation method of pseudo-boehmite of the present invention, in step (2), the first slurry is aged under certain conditions, the aging temperature is 100 °C-185 °C, for example, 120 °C-180 °C, and the pressure is 0.2 MPa-1 MPa, and the aging is carried out by constant temperature reaction of 2 h-10 h; wherein, the first slurry is firstly static aged for 1 h-4 h, for example, 2 h-3 h, and then the aging temperature and pressure are maintained, stirring is applied, the stirring speed is controlled at 50 r/min-400 r/min, for example, 60 r/min-400 r/min, and the time of aging under stirring is 1 h-6 h.

According to the preparation method of pseudo-boehmite of the present invention, in step (2), the conditions for static aging include: a temperature of 120 °C-180 °C, preferably 135 °C-180 °C, a pressure of 0.2 MPa-1 MPa, a time of 1 h-8 h, for example 2.5 h-7 h, a stirring speed of 100 r/min-450 r/min;

the conditions of aging under stirring include: a temperature of 120 °C-180°C, preferably 135 °C-180 °C, a pressure of 0.2 MPa-1 MPa, a time of 1 h-6 h, for example 1 h-5 h;
preferably, the ratio of the time of static aging to the time of aging under stirring is 1-5:1, preferably 1.25-3:1.

According to the preparation method of pseudo-boehmite of the present invention, in step (2), the aging temperature is 135 °C-180°C, the catalyst thus obtained can have a better effect of increasing the total yield of liquefied gas and gasoline.

According to the preparation method of pseudo-boehmite of the present invention, in step (3), filtering, washing and drying the aged slurry to obtain pseudo-boehmite with specific crystal characteristics and most probable pore diameter distribution. For example, the washing condition is to wash with deionized water at 70 °C-100 °C until the pH of the wet filter cake is 7-7.5. The drying temperature is preferably 60 °C-98 °C, such as 70 °C-98 °C, preferably 70 °C-95 °C, and the drying time is for example 2 h-4 h.

The pseudo-boehmite provided by the present invention has specific crystal characteristics, high crystallinity, large crystalline size, larger most probable pore diameter, good peptization (it can have a larger most probable pore diameter and good wear resistance after peptization), and still has a larger most probable pore diameter after acidification treatment.

The preparation method of pseudo-boehmite provided by the present invention is green and environmentally friendly, low-cost, and easy to implement, and can obtain pseudo-boehmite with specific crystal characteristics and most probable pore diameter distribution. The pseudo-boehmite has high crystallinity, large crystalline size, large most probable pore diameter, and good peptization solubility (it can have a larger most probable pore diameter and good wear resistance after peptization), and has a larger most probable pore diameter and good adhesion after acidification treatment.

The pseudo-boehmite provided by the present invention can be used for catalyst preparation. Its specific crystalline morphology makes it easier to accumulate to form a stable mesoporous structure when preparing the catalyst, and can obtain a larger most probable pore diameter than the prior art, and the pseudo-boehmite can be directly acidified without pore expansion treatment to obtain a catalyst with a larger most probable pore diameter and make the catalyst have good strength. For example, it when used in the preparation of catalytic cracking catalyst can produce a significant mesopore distribution, and a catalytic cracking catalyst with a most probable pore diameter greater than 5 nm can be obtained, and the catalyst strength is maintained to a qualified level while significantly improving the pore structure of catalyst. The prepared catalytic cracking catalyst can promote the efficient diffusion of heavy oil macromolecules, reaction intermediates and product molecules in the catalyst, reduce the coke yield, and optimize the product distribution.

The present invention also provides a catalytic cracking catalyst, which contains, based on dry weight, 10% to 50% by weight of a Y-type molecular sieve, on a dry basis, 0 wt%-40 wt% of other molecular sieves, 10% to 40% by weight (e.g., 15 wt%-35 wt%, or 20 wt%-30 wt%) of the pseudo-boehmite according to the present invention, based on alumina, 3% to 20% by weight of a binder, calculated as oxide, and 10% to 80% by weight of clay, on a dry basis.

Under the same conditions, the catalytic cracking catalyst prepared by using the pseudo-boehmite according to the present invention has a higher yield of liquefied gas and gasoline.

The catalytic cracking catalyst provided by the present invention contains a Y-type molecular sieve, such as one or more of REY, REHY, DASY, SOY, PSRY, HSY and HRY.

In the catalytic cracking catalyst provided by the present invention, optionally, other molecular sieves different from the Y-type molecular sieve may also be contained. Based on the weight of the catalytic cracking catalyst, on a dry basis, the content of the other molecular sieves is, for example, 0-40 wt%, or 0-30 wt%, or 1 wt%-20 wt%. The other molecular sieves are, for example, one or more of MFI structure zeolite, Beta zeolite, and non-zeolite molecular sieves. The MFI structure zeolite is, for example, one or more of HZSM-5, ZRP, and ZSP, the beta zeolite is, for example, H$\beta$, and the non-zeolite molecular sieve is, for example, one or more of aluminum phosphate molecular sieve (AlPO molecular sieve), silicon aluminum phosphorus molecular sieve (SAPO molecular sieve). It is preferably a molecular sieve with an MFI structure, which can further improve the yield of liquefied gas.

The catalytic cracking catalyst provided by the present invention contains clay. The clay is selected from one or more of the clays used as cracking catalyst components, such as one or more of kaolin, polyhydrous kaolin (ellorite), montmorillonite, diatomite, saponite, rectorite, sepiolite, attapulgite, hydrotalcite, and bentonite. These clays are well known to those of ordinary skill in the art. Preferably, the content of the clay in the catalytic cracking catalyst provided by the present invention is 10 wt% to 80 wt%, such as 20 wt%-55 wt%, or 30 wt%-50 wt%, on a dry basis.

The catalytic cracking catalyst provided by the present invention contains a binder, wherein the binder is an alumina binder, and the content of the alumina binder is 3 wt%-20 wt%, for example, 5 wt%-15 wt%.

The alumina binder is preferably aluminum sol, and the catalytic cracking catalyst contains 3 wt%-20 wt%, such as 4 wt%-10 wt% or 5 wt%-15 wt% of aluminum sol calculated as alumina.

The catalytic cracking catalyst provided by the present invention has a pore diameter distribution between 3 nm-4 nm, such as 3.5 nm-4 nm, and also has a significant pore diameter distribution between 4.5 nm-10 nm, such as 5 nm-9.5 nm or 6.5 nm-9 nm, preferably 7.7 nm-8.6 nm. Preferably, the catalytic cracking catalyst has a double most probable pore diameter distribution, with the pores with smaller pore diameters having a most probable pore diameter of 3.5 nm-4 nm, and the pores with larger pore diameters having a most probable pore diameter of 4.5 nm-10 nm, such as 5 nm-9.5 nm or 6.5 nm-9 nm, preferably 7.7 nm-8.6 nm.

The present invention also provides a preparation method of the catalyst of the present invention, which generally comprises the following steps of: forming a slurry comprising the pseudo-boehmite according to the present invention, a Y-type molecular sieve, optionally other molecular sieves, a binder, clay and water, spray drying, and optionally washing and drying. The spray drying, washing and drying are prior arts and are not particularly required by the present invention. The catalytic cracking catalyst can be prepared according to existing methods, for example, according to the methods disclosed in patents CN1098130A and CN1362472A.

According to a preferred embodiment, the preparation method of the catalytic cracking catalyst comprises: slurrying the pseudo-boehmite according to the present invention with water to form a pseudo-boehmite slurry, wherein the solid content of the pseudo-boehmite slurry is preferably 5 wt%-25 wt%, and then adding hydrochloric acid, wherein the mass ratio of HCl to the pseudo-boehmite according to the present invention calculated as alumina is preferably 0.037-0.104, and the concentration of hydrochloric acid can be 10 wt%-37 wt%, and then mixing with a slurry containing Y-type molecular sieve, optional other molecular sieves, a binder, clay and water to obtain a colloidal slurry, wherein the solid content of the slurry is preferably 20 wt%-40 wt%, and spray drying, and optionally washing and drying.

The preparation method of the catalytic cracking catalyst provided by the present invention may also include the following steps of: preparing the pseudo-boehmite according to the present invention, forming a slurry containing the pseudo-boehmite according to the present invention, Y-type molecular sieve, alumina binder, clay and water, and spray drying.

The present invention also provides a catalytic cracking method, comprising a step of contacting and reacting heavy oil with the catalytic cracking catalyst provided by the present invention under the conditions of heavy oil FCC. Wherein the heavy oil is one or more of vacuum wax oil, atmospheric residue oil, vacuum residue oil, and heavy deasphalted oil, and the FCC conditions are the reaction conditions of fluidized catalytic cracking of heavy oil. Generally, the reaction temperature of the reaction is 480 °C-530 °C, the reaction time is 1-10 seconds, and the catalyst-oil ratio is 3-20:1 by weight.

The catalytic cracking catalyst provided by the present invention contains the pseudo-boehmite according to the present invention, has significantly larger mesopores, for example, can have obvious mesopores with a pore diameter of 5 nm-10 nm, has better diffusion performance for heavy oil molecules, high accessibility of active centers, and lower coke selectivity. The catalytic cracking catalyst provided by the present invention is used for catalytic cracking of heavy oil, has lower coke selectivity than the existing catalytic cracking catalyst containing conventional pseudo-boehmite, and in a preferred case, can have higher gasoline yield and liquefied gas yield.

The preparation method of a catalytic cracking catalyst provided by the present invention does not require increasing the usage amount of other binders, and can produce significantly larger mesopores in case that the catalyst strength is qualified. For example, the catalyst can have more mesopores larger than 5 nm, which significantly improves the pore structure of the catalyst, is conducive to promoting the efficient diffusion of heavy oil macromolecules, reaction intermediates and product molecules in the catalyst, and in a preferred case, can increase the yield of gasoline and liquefied gas.

**Examples**

The following examples are used to further illustrate the present invention, but are not intended to limit the present invention.

In the present application, the crystallinity and crystalline size D of the sample are measured by X-ray powder diffraction (XRD) using RIPP139-90 and RIPP140-90 standard methods (see "Petrochemical Analysis Methods" (RIPP Test Methods) edited by Yang Cuiding et al., Science Press, published in 1990).

The crystallinity of pseudo-boehmite in the sample is calculated by measuring the integrated intensity of the sample and the standard sample S87-16b at $2\theta=38.3°$ (130 crystal plane) using the external standard method. The standard sample number is S87-16b, which is prepared by the Petrochemical Research Institute and is commercially available. After calibration, its pseudo-boehmite crystallinity is 98.0%. The crystallinity of the sample is calculated according to the following formula:

Crystallinity = Net integrated intensity of sample/Net integrated intensity of standard sample $\times$ 98.0

The crystalline size is calculated according to the Scherrer formula $D = \dfrac{K \times \lambda}{\beta \times \cos\theta}$, wherein K = 1.075, $\lambda$ is the wavelength of the anodic radiation K$\alpha$1 spectrum line, $\beta$ is the half-peak width of the specific diffraction peak of pseudo-boehmite, and $\theta$ is the Bragg diffraction angle of the diffraction peak. $D_{(130)}$ represents the crystalline size of the sample perpendicular to the (130) crystal plane, $D_{(130)} = \dfrac{K \times \lambda}{\beta_{130} \times \cos\theta}$, wherein $\beta_{130}$ is the half-peak width of the (130) diffraction peak of the sample. $D_{(020)}$ represents the crystalline size of the sample perpendicular to the (020) crystal plane, $D_{(020)} = \dfrac{K \times \lambda}{\beta_{020} \times \cos\theta}$, wherein $\beta_{020}$ is the half-peak width of the (020) diffraction peak of the sample.

In this application, the most probable porosity distribution and pore volume of the sample are determined by low-temperature nitrogen static volume adsorption method, the specific surface area and pore volume are calculated by using the two-parameter BET formula, and the pore diameter distribution is calculated by using the BJH formula. The pore diameter corresponding to the highest point of the pore diameter distribution curve is the most probable pore diameter of the sample. Using the ASAP 2405N V1.01 automatic adsorption instrument from USA Micromeritics company, the sample is vacuum degassed at $1.33\times10^{-2}$ Pa and 300 °C for 4h, and N2 is used as the adsorption medium, the adsorption-desorption isotherm of the sample is measured at 77.4 K.

In this application, the determination of the peptization index: weighing 10 grams of pseudo-boehmite, roasting it at 600 °C for 3 hours, placing it in a desiccator to cool, and after the temperature drops to room temperature, weighing it to obtain W0 grams, and obtaining a dry basis a0=W0/10, weighing the pseudo-boehmite of weight m1=6/a0 grams, placing the weighed m1 grams of pseudo-boehmite in a 100 mL polytetrafluoroethylene cup, adding deionized water to 40 grams, stirring evenly with a magnetic rotor, then adding 20 mL of 0.19N dilute nitric acid solution, stirring magnetically for 20 minutes, pouring all the solution into a centrifuge tube, putting the centrifuge tube in a centrifuge, and centrifuging it at a speed of 1900 rpm for 20 minutes. Pouring out the upper colloidal solution, putting it in a weighed crucible, drying it at 80 °C, roasting it at 600 °C for 3 hours, placing it in a desiccator to cool, and after the temperature drops to room temperature, weighing it to obtain m2 grams, and the peptization index DI=(m2/6)* 100%.

The sodium aluminate used in the examples is produced by Shanghai MacLean Biochemical Technology Co., Ltd., with a causticity ratio of 1 and analytical purity.

**Example 1**

A sodium aluminate solution with a concentration of 20 g $Al_2O_3$/L was reacted with a carbon dioxide gas with a volume fraction of 40% (the volume fraction of carbon dioxide was 40% and the balance was nitrogen) to form a gel, and the endpoint pH value was controlled to be 9.5. After the obtained slurry was transferred to an aging kettle, it was static aged at 135 °C and 0.35 MPa for 3 hours. Stirring was started under the temperature and pressure conditions, and the stirring rate was maintained at 150 r/min, and aging was continued for 1 hour. After the aging was completed, the obtained slurry was separated into solid and liquid, and washed continuously with deionized water at 85 °C for half an hour until the pH value of the wet filter cake was 7.1, and a wet filter cake of pseudo-boehmite with impurities removed was obtained. The wet filter cake was dried at 80 °C for 3 hours and crushed to obtain pseudo-boehmite powder SP1, and its physicochemical properties are shown in Table 1.

714.5 g of aluminum sol with an alumina content of 21 wt% was added to 1565.5 g of decationized water, stirring was started, and 2763 g of kaolin with a solid content of 76 wt% was added and dispersed for 60 minutes to obtain a dispersed kaolin slurry. 2049 g of SP1 pseudo-boehmite with an alumina content of 61 wt% was added to 8146 g of decationized water, and 210 ml of hydrochloric acid with a mass concentration of 36% was added under stirring. After acidification for 60 minutes, the dispersed kaolin slurry was added, and then 1500 g (on a dry basis) of ground molecular sieves (HSY-12 molecular sieve and ZSP-3 molecular sieve, the weight ratio of HSY-12 molecular sieve to ZSP-3 molecular sieve was 14:1 on a dry basis; both were products of Sinopec Catalyst Qilu Branch; wherein HSY-12 molecular sieve had $Re_2O_3$ content of 11.6 wt%, crystallinity of 50.3%, $Na_2O$ content of 0.9 wt%, Si/Al molar ratio of 2.5, ground particle size d(0.5)=2.6, d(0.9)=6.6); ZSP-3 molecular sieve had $Fe_2O_3$ content of 1.7 wt%, $P_2O_5$ content of 3.9 wt%, crystallinity of 78%, $Na_2O$ content of 0.05 wt%, Si/Al molar ratio of 25, ground particle size d(0.5)=3.9, d(0.9)=7.8); the molecular sieves used in each example and comparative example are the same), after being stirred evenly, it was spray dried and washed, and dried to obtain a catalyst, which is recorded as SC1. On a dry basis, the obtained SC1 catalyst contains 30 wt% of molecular sieve, 42 wt% of kaolin, 25 wt% of SP1 pseudo-boehmite, and 3 wt% of aluminum sol.

**Example 2**

A sodium aluminate solution with a concentration of 45 g $Al_2O_3$/L was contacted with a carbon dioxide gas with a volume fraction of 60% (the volume fraction of $CO_2$ was 60%, the balance was nitrogen) to conduct reaction, and the endpoint pH value was controlled to be 10.3. After the obtained slurry was transferred to an aging kettle, it was aged statically at 180 °C and 1.0 MPa for 2.5 h, and then stirring was started under the temperature and pressure maintained at 180 °C and 1.0 MPa, the stirring rate was maintained at 450 r/min, and aging was performed for 1 h. After the aging, the obtained slurry was separated into solid and liquid, and washed continuously with 95 °C deionized water for half an hour until the pH value of the wet filter cake was 7.3, to obtain a wet filter cake of pseudo-boehmite with impurities removed. The wet filter cake was dried at 90 °C for 4 h and crushed to obtain pseudo-boehmite powder SP2, and its physical and chemical properties are shown in Table 1.

Referring to the preparation method of Example 1, HSY-12 molecular sieve, ZSP-3 molecular sieve, kaolin, water, SP2 pseudo-boehmite binder and aluminum sol were formed into slurry according to the conventional preparation method of catalytic cracking catalyst, the slurry was spray-dried to prepare microsphere catalyst, and the prepared catalytic cracking catalyst was recorded as SC2. Wherein the obtained SC2 catalyst contains 30 wt% of molecular sieves (HSY-12 molecular sieve and ZSP-3 molecular sieve), 42 wt% of kaolin, 25 wt% of SP2 pseudo-boehmite and 3 wt% of aluminum sol on a dry basis.

**Example 3**

A sodium aluminate solution with a concentration of 8 g $Al_2O_3$/L was contacted with a carbon dioxide gas with a volume fraction of 35% (the volume fraction of $CO_2$ was 35%, the balance was nitrogen) to conduct reaction, and the endpoint pH value was controlled to be 9.3. After the obtained slurry was transferred to an aging kettle, it was aged statically at 120 °C and 0.2 MPa for 4 h, and then the stirring was started under the conditions of maintaining the temperature and pressure at 120 °C and 0.2 MPa, and the stirring rate was maintained at 100 r/min for aging for 2.5 h. After the aging, the obtained slurry was separated into solid and liquid, and washed continuously with 75 °C deionized water for half an hour until the pH value of the wet filter cake was 7.1, to obtain a wet filter cake of pseudo-boehmite with impurities removed. The wet filter cake was dried at 75 °C for 4 h and crushed to obtain pseudo-boehmite powder SP3, and its physical and chemical properties are shown in Table 1.

According to the method of Example 1, SP3 was used instead of SP1 to prepare the catalyst SC3.

**Example 4**

A sodium aluminate solution with a concentration of 15 g $Al_2O_3$/L was contacted with a carbon dioxide gas with a volume fraction of 50% (the volume fraction of $CO_2$ was 50%, the balance was nitrogen) to conduct reaction, and the endpoint pH value was controlled to be 9.7. After the obtained slurry was transferred to an aging kettle, it was aged statically at 150 °C and 0.48 MPa for 5 h, and then the stirring was started under the conditions of maintaining the temperature and pressure at 150 °C and 0.48 MPa, and the stirring rate was maintained at 250 r/min for aging for 4 h. After the aging, the obtained slurry was separated into solid and liquid, and washed continuously with 80 °C deionized water for half an hour until the pH value of the wet filter cake was 7.3, to obtain a wet filter cake of pseudo-boehmite with impurities removed. The wet filter cake was dried at 85 °C for 4 h and crushed to obtain pseudo-boehmite powder SP4, and its physical and chemical properties are shown in Table 1.

According to the method of Example 1, SP4 was used instead of SP1 to prepare the catalyst SC4.

**Example 5**

A sodium aluminate solution with a concentration of 55 g $Al_2O_3$/L was contacted with a carbon dioxide gas with a volume fraction of 90% (the $CO_2$ volume fraction was 90%, the balance was nitrogen) to conduct reaction, and the endpoint pH value was controlled to be 10.0. After the obtained slurry was transferred to an aging kettle, it was aged statically at 160 °C and 0.62 MPa for 7 h, and then the stirring was started under the conditions of maintaining the temperature and pressure at 160 °C and 0.62 MPa, and the stirring rate was maintained at 350 r/min for aging for 5 h. After the aging, the obtained slurry was separated into solid and liquid, and washed continuously with 90 °C deionized water for half an hour until the pH value of the wet filter cake was 7.4, to obtain a wet filter cake of pseudo-boehmite with impurities removed. The wet filter cake was dried at 95 °C for 4 h and crushed to obtain pseudo-boehmite powder SP5, and its physical and chemical properties are shown in Table 1.

According to the method of Example 1, SP5 was used instead of SP1 to prepare the catalyst SC5.

**Comparative Example 1**

A sodium aluminate solution with a concentration of 20 g $Al_2O_3$/L was reacted with a carbon dioxide gas with a volume fraction of 40% to form gel, and the endpoint pH value was controlled to be 9.5. The obtained slurry was transferred to an aging kettle and aged statically at 90 °C for 3 hours. After the aging, the obtained slurry was separated into solid and liquid, and washed with deionized water at 78 °C for half an hour to obtain a product filter cake with impurities removed, dried at 90 °C for 3 hours, and crushed to obtain pseudo-boehmite powder DP1, and its physical and chemical properties are shown in Table 1.

Molecular sieve (the same molecular sieve as used in Example 1), kaolin, water, DP1 pseudo-boehmite binder and aluminum sol were formed into slurry according to a conventional method for preparing a catalytic cracking catalyst, and spray-dried to prepare a microsphere catalyst. The prepared catalytic cracking catalyst was recorded as DC1 (referring to preparation method of Example 1). The obtained DC1 catalyst contains 30 wt% of molecular sieve, 42 wt% of kaolin, 25 wt% of DP1 pseudo-boehmite and 3 wt% of aluminum sol on a dry basis.

**Comparative Example 2**

A sodium aluminate solution with a concentration of 20 g $Al_2O_3$ /L was reacted with a carbon dioxide gas with a volume fraction of 40%, and the endpoint pH value was controlled to be 9.5. The obtained slurry was transferred to an aging kettle and aged statically at 135 °C and 0.35 MPa for 3.5 h. After aging, the obtained slurry was separated into solid and liquid, and washed continuously with deionized water at 80 °C for half an hour to obtain a wet filter cake of pseudo-boehmite with impurities removed. The wet filter cake was dried at 80 °C for 3 hours and crushed to obtain pseudo-boehmite powder DP2, and its physical and chemical properties are shown in Table 1.

Molecular sieve, kaolin, water, DP2 pseudo-boehmite binder and aluminum sol were formed into slurry according to a conventional method for preparing a catalytic cracking catalyst, and the slurry was spray-dried to prepare a microsphere catalyst. The prepared catalytic cracking catalyst was recorded as DC2 (referring to preparation method of Example 1). The obtained DC2 catalyst contains 30 wt% of molecular sieve, 42 wt% of kaolin, 25 wt% of DP2 pseudo-boehmite and 3 wt% of aluminum sol on a dry basis.

**Comparative Example 3**

A high-purity sodium aluminate solution with an $Al_2O_3$ content of 45 g/L was used as the raw material, and $CO_2$ with 40% concentration was introduced to perform a gelling reaction. The flow rate per hour was controlled at 3.0 m³/h, the reaction time was controlled at 40 minutes, the $Al_2O_3$ residue was controlled at 5 g/l, and the final temperature was controlled at 35 °C. After the reaction, the slurry was separated and washed, and the filter cake was washed with 85 °C high-purity water until the pH value of the filter cake was 7.0. The filter cake prepared above was added into high-purity water and stirred, and then urea with a concentration of 8 g/L was added hereinto. After stirring for 50 minutes, the slurry was transferred to the autoclave equipment, the autoclave temperature was controlled at 150 °C, the pressure was 0.6 MPa, and it was aged statically for 3 hours. After aging, it was washed continuously with 85 °C deionized water for half an hour, filtered and dried at 90 °C. The final product, pseudo-boehmite DP3, was obtained by crushing, and its physical and chemical properties are shown in Table 1.

Molecular sieve, kaolin, water, DP3 pseudo-boehmite binder and aluminum sol were formed into slurry according to a conventional method for preparing a catalytic cracking catalyst, and the slurry was spray-dried to prepare a microsphere catalyst. The prepared catalytic cracking catalyst is recorded as DC3 (referring to preparation method of Example 1). The DC3 catalyst obtained contains 30 wt% of molecular sieve, 42 wt% of kaolin, 25 wt% of DP3 pseudo-boehmite and 3 wt% of aluminum sol on a dry basis.

**Comparative Example 4**

A sodium aluminate solution with a concentration of 45 g $Al_2O_3$/L was contacted with a carbon dioxide gas with a volume fraction of 60% (the volume fraction $CO_2$ was 60%, the balance was nitrogen) to conduct reaction, and the endpoint pH value was controlled to be 10.3. After the obtained slurry was transferred to an aging kettle, the stirring rate was maintained at 450 r/min at 180 °C and 1.0 MPa, and the aging was carried out for 3.5 h. After the aging, the obtained slurry was separated into solid and liquid, and washed continuously with 95 °C deionized water for half an hour until the pH value of the wet filter cake was 7.3, and the wet filter cake of pseudo-boehmite with impurities removed was obtained. The wet filter cake was dried at 90 °C for 4 h and crushed to obtain pseudo-boehmite powder DP4, and its physical and chemical properties are shown in Table 1.
Catalyst DC4 was prepared by referring to the method of Example 1 and using DP4 instead of SP1.

Table 1. Properties of pseudo-boehmite

| Example No. | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|
| Sample No. | SP1 | SP2 | SP3 | SP4 | SP5 | DP1 | DP2 | DP3 | DP4 |
| Crystalli nity /% | 99 | 103 | 93 | 100 | 105 | 73 | 96 | 82 | 101 |
| $D_{(130)}$ /nm | 6.7 | 7.8 | 5.2 | 6.5 | 8.2 | 3.8 | 6.5 | 5.1 | 5.3 |
| $D_{(130)}$ /$D_{(020)}$ | 1.27 | 1.29 | 1.15 | 1.25 | 1.22 | 0.94 | 0.96 | 0.95 | 0.96 |
| Most probable pore diameter /nm | 7.4 | 7.8 | 4.8 | 7.2 | 8.5 | 3.8 | 4.3 | 4.5 | 4.5 |
| Pore volume /mL/g | 0.35 | 0.45 | 0.36 | 0.42 | 0.48 | 0.38 | 0.38 | 0.56 | 0.37 |
| Peptizati on index/% | 98 | 97 | 95 | 96 | 98 | 98 | 94 | 97 | 98 |
| Most probable pore diameter of sample after acidifica tion and calcinati on /nm* | 7 | 7.2 | 4.5 | 6.8 | 8.3 | 3.8 | 4 | 4.2 | 4.3 |

* Acidification conditions: acid-aluminum ratio (36 wt% HCl : $Al_2O_3$ mass ratio) was 0.2, solid content of acidified mixture was 10 wt%; calcination temperature was 550 °C, calcination time was 2 h.

As can be seen from Table 1, the pseudo-boehmite provided by the present invention has a high crystallinity, a large crystalline size, a larger $D_{(130)}$ / $D_{(020)}$, a larger most probable pore diameter, a better peptization performance, and most probable pores of the calcined sample after peptization are still larger. It can be seen that compared with the existing pseudo-boehmite, when the pseudo-boehmite provided by the present invention is used for the preparation of catalytic cracking catalysts, it has a higher most probable pore diameter, and can provide more mesoporous structures.

**Examples 6-10**

Examples 6-10 illustrate the catalytic cracking reaction performance of the pseudo-boehmite provided by the present invention.
After aging the SC1-SC5 catalysts at 800 °C for 17 hours with 100% steam, their catalytic cracking performance was evaluated in a small fixed fluidized bed reactor (ACE). The cracked gas and product oil were collected and analyzed by gas chromatography respectively. The catalyst loading was 9 g, the reaction temperature was 500 °C, the weight hourly space velocity was 16 $h^{-1}$; the properties of the feed oil in the ACE experiment are shown in Table 3, and the evaluation results are shown in Table 4.

**Comparative Examples 5-8**

Comparative Examples 5-8 illustrate the reaction performance of the catalytic cracking catalysts prepared from the pseudo-boehmite of Comparative Examples 1-3.

After aging the DC1-DC4 catalysts at 800 °C for 17 hours with 100% steam, their catalytic cracking performance was evaluated in a small fixed fluidized bed reactor (ACE). The properties of the feed oil in the ACE experiment are shown in Table 3, and the evaluation results are listed in Table 4.

Table 2

| Example No. | Sample No. | The most probable pore diameter of catalyst /nm | Wear index |
|---|---|---|---|
| Example 1 | SC1 | 3.8, 7.2 | 2.0 |
| Example 2 | SC2 | 3.8, 7.7 | 2.1 |
| Example 3 | SC3 | 3.8, 4.8 | 1.5 |
| Example 4 | SC4 | 3.8, 7.0 | 2.3 |
| Example 5 | SC5 | 3.8, 8.6 | 2.5 |
| Comparative Example 1 | DC1 | 3.8 | 1.6 |
| Comparative Example 2 | DC2 | 3.8 | 1.6 |
| Comparative Example 3 | DC3 | 3.8, 4.3 | 2.4 |

As shown in Table 1, the pseudo-boehmite provided by the present invention has a larger crystalline size and a larger $D_{(130)} / D_{(020)}$, a larger most probable pore diameter, a higher crystallinity, a better peptization performance, and the most probable pore diameter of the calcined sample after peptization is still larger. As shown in Table 2, the catalytic cracking catalyst provided by the present invention has a larger mesopore distribution. In addition to having a pore distribution at 3.8 nm, there is a certain mesopore distribution at higher pore diameters. The catalyst prepared from the conventional pseudo-boehmite has a mesopore distribution only at 3.8 nm.

Table 3

| name | Wu Mixed 3. 2007 |
|---|---|
| Density (20°C)/(g.cm$^{-3}$) | 0.9104 |
| Viscosity (80°C)/(mm$^2$/s) | 19.24 |
| Viscosity (100°C)/(mm$^2$/s) | 11.23 |
| Condensation point/°C | 40 |
| Carbon residue value/wt% | 3.11 |
| Saturated hydrocarbons/wt% | 62.3 |
| Aromatics/wt% | 22.7 |
| Gum/wt% | 14.4 |
| Asphaltene/wt% | 0.6 |
| Element mass fraction/% | |
| C | 86.9 |
| H | 12.63 |
| S | 0.61 |
| N | 0.2 |
| Distillation range (D1160)/°C | |
| Initial distillation point | 267 |
| 5% | 318 |
| 10% | 339 |
| 30% | 407 |
| 50% | 451 |
| 70% | 494 |
| 81.5% | 540 |

Table 4

| Example No. | Exa mple 6 | Exa mple 7 | Exa mple 8 | Exa mple 9 | Exa mple 10 | Com parati ve Exa mple 5 | Com parati ve Exa mple 6 | Com parati ve Exa mple 7 | Com parati ve Exam ple 8 |
|---|---|---|---|---|---|---|---|---|---|
| Sample No. | SC1 | SC2 | SC3 | SC4 | SC5 | DC1 | DC2 | DC3 | DC4 |
| Pseudo-boehmite used | SP1 | SP2 | SP3 | SP4 | SP5 | DP1 | DP2 | DP3 | DP4 |
| Catalyst to oil ratio (weight ratio) | 4 | 4 | 4 | 4 | 4 | 4 | 4 | 4 | 4 |
| Product distribution /wt% | | | | | | | | | |
| Dry gas | 3.18 | 3.83 | 3.95 | 3.89 | 3.79 | 3.48 | 3.63 | 3.76 | 3.74 |
| Liquefied gas | 26.58 | 27.28 | 26.42 | 26.48 | 27.35 | 26.36 | 26.54 | 26.46 | 26.43 |
| Coke | 2.77 | 2.84 | 3.02 | 2.75 | 2.51 | 3.37 | 3.84 | 3.54 | 3.67 |
| gasoline | 38.98 | 39.93 | 38.56 | 39.12 | 40.04 | 38.25 | 38.86 | 38.25 | 38.16 |
| Light cycle oil | 17.33 | 16.09 | 16.34 | 16.85 | 16.21 | 17.24 | 16.60 | 16.96 | 16.74 |
| heavy oil | 11.16 | 10.03 | 11.71 | 10.91 | 10.1 | 11.30 | 10.54 | 11.04 | 11.26 |
| Gasoline + LPG | 65.56 | 67.21 | 64.98 | 65.6 | 67.39 | 64.61 | 65.4 | 64.71 | 64.59 |

As can be seen from Table 4, the catalytic cracking catalyst provided by the present invention has significantly lower coke selectivity, higher gasoline yield and liquefied gas yield. In particular, when the $D_{(130)}$ of the pseudo-boehmite with specific characteristics is 7.8-8.2 and the $D_{(130)}/D_{(020)}$ is higher than 1.2, significantly higher gasoline and liquefied gas yields can be achieved.

**Claims**

1.   A pseudo-boehmite, **characterized in that** the ratio of the crystalline sizes $D_{(130)}$ and $D_{(020)}$ of the pseudo-boehmite is $D_{(130)}/D_{(020)} = 1.0\text{-}1.5$, preferably, 1.1-1.3.

2.   The pseudo-boehmite according to any one of the preceding claims, **characterized in that** the crystalline size D is measured by X-ray powder diffraction (XRD) and the crystalline size D is calculated according to the Scherrer formula

$$D = \frac{K \times \lambda}{\beta \times \cos\theta}$$

, wherein K=1.075, $\lambda$ is the wavelength of the anodic radiation K$\alpha$1 spectrum line, $\beta$ is the half-peak width (in radians) of the specific diffraction peak of pseudo-boehmite, and $\theta$ is the Bragg diffraction angle (in degrees) of the diffraction peak, that is, $D_{(130)}$ represents the crystalline size of the sample perpendicular to the (130) crystal

plane, $D_{(130)} = \frac{K \times \lambda}{\beta_{130} \times \cos\theta}$ , $\beta_{130}$ is the half-peak width of (130) diffraction peak (corresponding to 2$\theta$=38.3°) of the sample; $D_{(020)}$ represents the crystalline size of the sample perpendicular to the (020) crystal plane,

$D_{(020)} = \frac{K \times \lambda}{\beta_{020} \times \cos\theta}$ , $\beta_{020}$ is the half-peak width of (020) diffraction peak (corresponding to 2$\theta$=14.1°) of the sample.

3.   The pseudo-boehmite according to any one of the preceding claims, **characterized in that** the molecular formula of the pseudo-boehmite is AlOOH•nH$_2$O, n = 0.08-0.62, and its crystalline size $D_{(130)}$ is not greater than 10 nm.

4.   The pseudo-boehmite according to any one of the preceding claims, **characterized in that** the crystalline size of the pseudo-boehmite is $D_{(130)}$ = 4 nm-10 nm, preferably, 6.5 nm-8.2 nm, or 7.8 nm-8.2 nm.

5. The pseudo-boehmite according to any one of the preceding claims, **characterized in that** the pseudo-boehmite has a most probable pore diameter greater than 4.5 nm and not more than 12 nm, such as 4.8 nm-11 nm, or 5 nm-10 nm.

6. The pseudo-boehmite according to any one of the preceding claims, **characterized in that** the pseudo-boehmite has a crystallinity of 85%-110%, such as 88%-108%.

7. The pseudo-boehmite according to any one of the preceding claims, **characterized in that** the peptization index of the pseudo-boehmite is 90%-100%, such as 93%-99%.

8. The pseudo-boehmite according to any one of the preceding claims, **characterized in that** the pore volume of the pseudo-boehmite is 0.3 cm$^3$/g-0.58 cm$^3$/g, such as 0.31 cm$^3$/g-0.52 cm$^3$/g.

9. A method for preparing pseudo-boehmite, comprising the following steps :

   (1) reacting a sodium aluminate solution with $CO_2$ to form a first slurry;
   (2) aging the first slurry under certain conditions to obtain an aged slurry; the aging under the certain conditions includes: firstly static aging, and then aging under stirring, and the aging temperature is above 100 °C and not more than 185 °C;
   (3) filtering, washing and drying the aged slurry.

10. The method for preparing pseudo-boehmite according to any one of the preceding claims, **characterized in that** in step (1), the concentration of the sodium aluminate solution is 5 g/L-60 g/L in terms of $Al_2O_3$; and the pH value at endpoint of the reaction of the sodium aluminate solution with $CO_2$ is 8.5-10.5.

11. The method for preparing pseudo-boehmite according to any one of the preceding claims, **characterized in that** in step (1), the conditions for the reaction of the sodium aluminate solution with $CO_2$ include: a reaction starting temperature of 10 °C-35 °C, a $CO_2$-containing gas with a $CO_2$ concentration of 20%-100% by volume (the balance is an inert gas such as nitrogen) is introduced into the sodium aluminate solution for conducting reaction, and the reaction end temperature is preferably 15 °C-55 °C.

12. The method for preparing pseudo-boehmite according to any one of the preceding claims, **characterized in that** in step (2), for the slurry, the aging temperature is 120 °C-180°C, the aging pressure is 0.2 MPa-1 MPa, and the aging time is 2 h-12 h, for example, 2 h-10 h.

13. The method for preparing pseudo-boehmite according to any one of the preceding claims, **characterized in that** the time of static aging in step (2) is 1 h-8 h, such as 2.5 h-7 h, or 1 h-4 h, such as 2 h-3 h, and the aging time under stirring is 1 h-6 h.

14. The method for preparing pseudo-boehmite according to any one of the preceding claims, **characterized in that** the aging temperature is 135 °C-180 °C, and the aging is preferably an aging at a constant temperature.

15. The method for preparing pseudo-boehmite according to any one of the preceding claims, **characterized in that** the stirring speed of the aging under stirring is 50 r/min-450 r/min, 100 r/min-400 r /min.

16. The method for preparing pseudo-boehmite according to any one of the preceding claims, **characterized in that** in step (2),

   the conditions of the static aging include: a temperature of 120 °C-180 °C, preferably 135 °C-180 °C, a pressure of 0.2 MPa-1 MPa, a time of 1 h-8 h, for example 2.5 h-7 h, a stirring speed of 100 r/min-450 r/min;
   the conditions of the aging under stirring include: a temperature of 120 °C-180 °C, preferably 135 °C-180 °C, a pressure of 0.2 MPa-1 MPa, a time of 1 h-6 h, for example 1 h-5 h;
   preferably, the ratio of the time of static aging to the time of aging under stirring is 1-5:1, preferably 1.25-3: 1.

17. The method for preparing pseudo-boehmite according to any one of the preceding claims, **characterized in that** the washing conditions in step (3) are: washing with deionized water at 70 °C-100 °C until the pH value of the wet filter cake is 7-7.5; and the drying in step (3) is performed at a drying temperature of 70 °C-98 °C.

18. Use of the pseudo-boehmite according to any of the preceding claims, which is used as a catalyst, carrier, and binder in the petroleum industry; as a carrier coating for automobile exhaust treatment catalysts in the automobile industry; as an additive for flame retardant materials in the fire protection field; as an ink-absorbing coating in high-grade inkjet printing paper in the papermaking industry; as a gas purification adsorbent, drinking water defluoridation agent, industrial wastewater color and odor eliminator in the environmental protection industry; as a coating additive in the construction industry; and as a reinforcing agent in ceramic composite materials.

19. A catalytic cracking catalyst comprising 10 wt%-50 wt% of Y-type molecular sieve on a dry basis, 0-40 wt% of other molecular sieves on a dry basis, 10 wt%-40 wt% of pseudo-boehmite according to any one of the preceding claims calculated as alumina, 3 wt%-20 wt% of a binder calculated as oxide and 10 wt%-80 wt% of clay on a dry basis;

preferably, the other molecular sieves are one or more of MFI structure zeolite, Beta zeolite, and non-zeolite molecular sieves; more preferably, the other molecular sieves are one or more of HZSM-5, ZRP, and ZSP; and/or, preferably, the Y-type molecular sieve is one or more of REY, REHY, DASY, SOY, PSRY, HSY, and HRY.

20. A method for preparing the catalytic cracking catalyst according to any one of the preceding claims, comprising the steps of:

preparing the pseudo-boehmite according to any one of the preceding claims,
forming a slurry comprising the pseudo-boehmite, Y-type molecular sieve, optionally other molecular sieves, a binder, clay and water, and
spray drying.

21. The method for preparing a catalytic cracking catalyst according to any one of the preceding claims, **characterised in that** the method comprises:

slurrying the pseudo-boehmite according to any one of the preceding claims with water to form a pseudo-boehmite slurry, of which the solid content is preferably 5 wt%-25 wt%;
adding hydrochloric acid, the mass ratio of HCl to the pseudo-boehmite calculated as alumina is 0.037-0.104, and the concentration of hydrochloric acid can be 10 wt%-37 wt%;
then mixing it with the slurry containing Y-type molecular sieve, optional other molecular sieves, binder, clay and water to obtain a colloidal slurry, wherein the solid content of the slurry is preferably 20 wt%-40 wt%.
spray drying, and
optionally, washing and drying.

22. A catalytic cracking method, which comprises a step of contacting and reacting heavy oil with a catalytic cracking catalyst under FCC conditions, **characterized in that** the catalytic cracking catalyst is a catalytic cracking catalyst according to any one of the preceding claims or a catalytic cracking catalyst obtained according to the preparation method of a catalytic cracking catalyst according to any one of the preceding claims; for example, the FCC conditions include : a reaction temperature of 480 °C-530 °C, a reaction time of 1-10 seconds, and a catalyst-oil ratio of 3-20:1 by weight.

## INTERNATIONAL SEARCH REPORT

International application No.

**PCT/CN2023/097087**

### A. CLASSIFICATION OF SUBJECT MATTER

C01F7/142(2022.01)i; B01J21/04(2006.01)i; B01J32/00(2006.01)i

According to International Patent Classification (IPC) or to both national classification and IPC

### B. FIELDS SEARCHED

Minimum documentation searched (classification system followed by classification symbols)

IPC: C01F7/-; B01J21/-; B01J32/-

Documentation searched other than minimum documentation to the extent that such documents are included in the fields searched

Electronic data base consulted during the international search (name of data base and, where practicable, search terms used)

CNTXT, ENTXTC, DWPI, CNKI, Web of science, Elsevier: 拟薄水铝石, 薄水铝石, 氧化铝, 晶粒, 半峰宽, 晶面, 孔径, 铝酸钠, 偏铝酸钠, 老化, 静置, 搅拌, 重油, FCC, Pseudo?boehmite, boehmite, alumina, grain, half?peak width?, crystal face, pore size, sodium aluminate, sodium meta?aluminate, aging 5d stirring, aging 5d rest, heavy Oil

### C. DOCUMENTS CONSIDERED TO BE RELEVANT

| Category* | Citation of document, with indication, where appropriate, of the relevant passages | Relevant to claim No. |
|---|---|---|
| Y | CN 103449485 A (ALUMINUM CORPORATION OF CHINA LTD.) 18 December 2013 (2013-12-18) description, paragraphs 25-30 | 1-22 |
| Y | CN 112678853 A (CHINA PETROLEUM & CHEMICAL CORP. et al.) 20 April 2021 (2021-04-20) description, paragraphs 20-26 and 29 | 1-22 |
| Y | CN 112678856 A (CHINA PETROLEUM & CHEMICAL CORP. et al.) 20 April 2021 (2021-04-20) description, paragraphs 20-26 and 29 | 1-22 |
| Y | CN 101451074 A (CHINA PETROLEUM & CHEMICAL CORP. et al.) 10 June 2009 (2009-06-10) description, page 8, paragraph 7, and page 9, paragraphs 1-3 | 18-22 |
| A | CN 105688977 A (CHINA NATIONAL PETROLEUM CORP.) 22 June 2016 (2016-06-22) entire document | 1-22 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 August 2023** | **02 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/097087** |

### C.      DOCUMENTS CONSIDERED TO BE RELEVANT

| Category* | Citation of document, with indication, where appropriate, of the relevant passages | Relevant to claim No. |
|---|---|---|
| A | CN 114522692 A (CHINA PETROLEUM & CHEMICAL CORP. et al.) 24 May 2022 (2022-05-24) entire document | 1-22 |
| A | CN 114524447 A (CHINA PETROLEUM & CHEMICAL CORP. et al.) 24 May 2022 (2022-05-24) entire document | 1-22 |
| A | US 5055019 A (CONDEA CHEMIE GMBH) 08 October 1991 (1991-10-08) entire document | 1-22 |
| A | WO 2022063259 A1 (CHINA PETROLEUM & CHEM CORP. et al.) 31 March 2022 (2022-03-31) entire document | 1-22 |

Form PCT/ISA/210 (second sheet) (July 2022)

**INTERNATIONAL SEARCH REPORT**
Information on patent family members

International application No.

**PCT/CN2023/097087**

| Patent document cited in search report | | | Publication date (day/month/year) | Patent family member(s) | | | Publication date (day/month/year) |
|---|---|---|---|---|---|---|---|
| CN | 103449485 | A | 18 December 2013 | None | | | |
| CN | 112678853 | A | 20 April 2021 | None | | | |
| CN | 112678856 | A | 20 April 2021 | None | | | |
| CN | 101451074 | A | 10 June 2009 | None | | | |
| CN | 105688977 | A | 22 June 2016 | None | | | |
| CN | 114522692 | A | 24 May 2022 | None | | | |
| CN | 114524447 | A | 24 May 2022 | None | | | |
| US | 5055019 | A | 08 October 1991 | IT | 8920124 | D0 | 13 April 1989 |
| | | | | IT | 1230055 | B | 27 September 1991 |
| | | | | NL | 8900924 | A | 01 February 1990 |
| | | | | NL | 194792 | B | 01 November 2002 |
| | | | | NL | 194792 | C | 04 March 2003 |
| | | | | DE | 3823895 | C1 | 21 December 1989 |
| | | | | FR | 2634194 | A1 | 19 January 1990 |
| | | | | FR | 2634194 | B1 | 19 March 1993 |
| | | | | GB | 8911178 | D0 | 05 July 1989 |
| | | | | GB | 2220651 | A | 17 January 1990 |
| | | | | GB | 2220651 | B | 22 January 1992 |
| | | | | BE | 1001847 | A3 | 20 March 1990 |
| | | | | JPH | 0264010 | A | 05 March 1990 |
| | | | | JPH | 0678164 | B2 | 05 October 1994 |
| WO | 2022063259 | A1 | 31 March 2022 | KR | 20230077740 | A | 01 June 2023 |
| | | | | TW | 202224764 | A | 01 July 2022 |
| | | | | EP | 4219001 | A1 | 02 August 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110304644 A
- CN 1098130 A
- CN 1362472 A

**Non-patent literature cited in the description**

- Petrochemical Analysis Methods. RIPP Test Methods. Science Press, 1990